(19) Europäisches Patentamt
European Patent Office
Office européen des brevets

(11) Publication number: 0 191 970 B1

(12) EUROPEAN PATENT SPECIFICATION

(45) Date of publication of patent specification: 20.09.89

(51) Int. Cl.[4]: G 03 C 5/16, B 41 M 5/26, C 09 B 47/00, G 11 B 7/24, G 11 B 11/03

(21) Application number: 85304751.2

(22) Date of filing: 03.07.85

# (54) Recording information media comprising chromophores.

(30) Priority: 04.02.85 US 698206

(43) Date of publication of application:
27.08.86 Bulletin 86/35

(45) Publication of the grant of the patent:
20.09.89 Bulletin 89/38

(84) Designated Contracting States:
BE DE FR GB IT NL

(56) References cited:
EP-A-0 134 518
EP-A-0 188 331
US-A-4 412 231
US-A-4 446 223
US-A-4 492 750

(73) Proprietor: CELANESE CORPORATION
1211 Avenue of the Americas
New York New York 10036 (US)
(73) Proprietor: Case Western Reserve University
2040 Adelbert Road
Cleveland Ohio 44106 (US)

(72) Inventor: Kenney, Malcolm E.
1203 Hereford Road
Cleveland Heights Ohio (US)
Inventor: Jones, R. Sidney, Jr.
123 Mountainside Drive
Randolph New Jersey (US)
Inventor: Kuder, James A.
91 Willoughby Road
Fanwood New Jersey (US)
Inventor: Nikles, David E.
23 Edgewood Avenue
Colonia New Jersey (US)

(74) Representative: De Minvielle-Devaux, Ian Benedict Peter et al
CARPMAELS & RANSFORD 43, Bloomsbury Square
London WC1A 2RA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 191 970 B1

Courier Press, Leamington Spa, England.

(56) References cited:

JAPANESE JOURNAL OF APPLIED PHYSICS, part 1, vol. 22, no. 2, February 1983, A. KUROIWA et al., "Reversible read-write-erase properties of styrene oligomer optical recording media", pp. 340-343

Schechtmann, L.A., PhD Thesis "Conducting Poly (Metallsonaphthalocyanines) and Related Macrocyclic Compounds", August 1983, Dept. of Chemistry, Case Western Reserve University Mikhalenko, S.A. and Luk'yanets, E.A., "Phthalocyanines and Related Compounds II.

Synthesis and Certain Properties of 2,3-Naphthaloyanines", Zhumal Obshchei Khimii, vol. 30, no. 11, pp. 2554-2558, November 1969 Vogler, A. and Kunkely, H. "Template Synthesis and Optical Spectra of Zinc-2,3-Naphthaloyanine" Inorganica Chemica Acta", 44, (1980), pp. L209-L210

**Description**

Field of the Invention

This invention relates to a novel optical recording medium and the recording of information thereon. More particularly, the present invention relates to an information recording medium, preferably in the form of a disk or in tape format, suitable for use with optical recording and playback apparatus, the information layer of which comprises a naphthalocyanine chromophore.

Description of the Prior Art

Optical recording methods in which light from a laser is focused upon the surface of a recording medium with sufficient intensity to cause a detectable change in the physical characteristics of the surface material have been proposed. Among these methods is the establishment of an information pattern of pits. In such methods, the information representative pattern of pits may be formed in the surface of the recording medium by suitably controlling the intensity of the focused light in accordance with the information to be recorded while relative motion is estabilished between the recording medium and the focussed light spot.

For instance, in recent years, attention has been increasingly paid to the information recording method in which information is written in a thin film of metal or the like formed on a substrate by using a laser ray or beam. According to such a method, the information recording has been accomplished by forming holes or recesses in the metallic thin film under the action of a thermal energy beam such as a laser ray. *See*, e.g., U.S. Patent No. 4,238,803.

Dyes and pigments have also been employed in information layers of recording media, often to enhance the sensitivity of the recording layers at the particular wavelength of the laser being used, which results in a much sharper recording and playback of the information.

For example, Spong, U.S. Patent No. 4,097,895, describes a recording medium which comprises a light reflecting material, such as aluminum or gold, coated with a dye-containing light absorbing layer, such as fluorescein, which is operative with an argon laser light source. The thickness of the light absorbing layer is chosen so that the structure has minimum reflectivity. An incident light beam then creates a hole in the light absorbing layer, exposing the light reflecting layer. After recording at the wavelength of the recording light, maximum contrast between the minimum reflectance of the light absorbing layer and the reflectance of the light reflecting layer exists. In this regard, note also U.S. Patent No. 4,219,826.

Carlson, in U.S. Patent No. 3,475,760, discloses a system for directly recording information in a thermoplastic film as a deformation by using a high energy laser scanning beam of small diameter. It is further disclosed that the sensitivity of the films for laser film deformation recording can be enhanced by the addition of pigments or dyes which exhibit a high absorption at the laser wavelength. Erasure of the film deformation is accomplished by recording over the information to be erased using a similar laser beam but with a much smaller scan line spacing, preferably so as to provide overlap of the scan lines.

Other U.S. patents which disclose the use of a light absorbing dye in the recording layer include U.S. Patent Nos. 4,412,231 and 4,446,223. The former patent discloses using a mixture of dyes having different light absorbing wavelengths so that the resulting recording layer has a light absorptivity of 80% or more at all the wavelengths in the range of from 400—900 nm. The latter patent discloses an optical information recording element comprising a support coated with a layer of an amorphous composition, which composition comprises a binder and an oxoindolizine or oxoindolizinium dye.

In a paper entitled "Single Wavelengths Optical Recording in Pure, Solvent Coated Infrared Dye Layers" by Gravesteijn, Steenbergen and van der Veen, experiments on the use of certain dyes for optical recording for digital and video applications at GaAlAs laser wavelengths are reported. The paper was presented at the Proceeding of the SPIE, "Optical Storage Media", volume 420, June 6—10, 1983. The specific dyes discussed in the paper are squarylium dyes and pentamethine dyes. It is further suggested in the paper that the solubility of the squarylium dyes in organic solvents can be greatly increased by the introduction of t-butyl groups into thiopyrylium end groups.

The use of dyes in conjunction with optical recording media comprising a styrene oligomer is disclosed in the article by Kuroiwa et al appearing in the *Japanese Journal of Applied Physics,* Vol. 22, No. 2, February, 1983, pp. 340—343. Among the dyes and pigments discussed as being useful is a copper phthalocyanine pigment. Phase separation and incompatibility between the dyes and oligomers were noted in the article as being problems in the use of dyes for optical information media.

AU—A—84/30 756 and US—A—4 492 750 disclose optical recording media comprising certain naphthalocyanines in which the central atom is a metal or its oxide, chloride or bromide.

Lee Arnold Schechtman in his thesis *Compounds, Poly(metallonaphthalocyanines) and Related Macrocyclic Compounds,* August, 1983, Dept. of Chemistry, Case Western Reserve University, discloses a particular chromophore which absorbs light at the wavelength of about 770 nm, i.e., bis-tri-n-hexylsiloxy-silicon naphthalocyanine. The suitability of such a chromophore for use in an optical recording medium, however, has heretofore not been suggested or explored.

S. A. Mikhalenko and E. A. Luk'yanets in "Phthalocyanines and Related Compounds II. Synthesis and Certain Properties of 2,3-naphthalocyanines", *Zhurnal Obshchei Khimii,* Vol. 30, No. 11, pp. 2554—2558, November, 1969, disclose certain substituted 2,3-naphthalocyanines. The suitability of such compounds for

use in optical recording media, however, it is not suggested therein. Note also Vogler and Kunkely, "Template Synthesis and Optical Spectra of Zinc-2,3-naphthalocyanine", *Inorganica Chemica Acta,* 44 (1980), L209—L210.

The recording medium, of course, is one of the key elements in any optical recording system, i.e., a system in which the information is recorded or read by light. Such system would have a usefulness in the storage of audio and video information, data processing and document processing. The commercial viability of an optical recording medium would of course depend upon such technical parameters as the sharpness in recording and playback of the information, i.e., a high signal to noise ratio, as well as the useful life of the information medium. Maintaining the sensitivity of a recording medium throughout the cycles of record-read-erase is also an important consideration.

While dyes or pigments have been employed in information storage layers of recording media due to their excellent absorption properties, the search for an improved information storage medium comprising a dye or pigment exhibiting stability and intense absorption at specified wavelengths is continuously ongoing. The sensitivity of the dye recording media often degrades due to the chemical or photolytic instability of the dye material used. Thus, the useful life of the recording medium is cut short. Furthermore, the ability of the dye to be applied in a polymer film is often a problem due to the lack of solubility in conventional solvents. Attempts to alter the dye molecule, however, often results in an undesirable change in its spectral properties.

## Summary of the Invention

The present invention provides a recording medium for the optical recordation of information and for use with a recording laser providing light of a predetermined frequency, wherein the information layer of the recording medium comprises a naphthalocyanine chromophore. The chromophore is of the general structural formula:

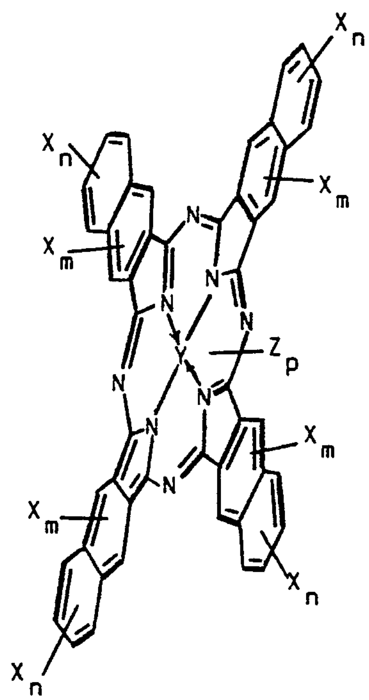

(I)

wherein Y is Si, Ge, Sn, Al, Ga, In or a transition metal, preferably a six-coordinate transition metal, e.g. Ti, Zr, Hf;

Z is halogen; hydroxy; $OR_1$ or $OSiR_2R_3R_4$,

wherein $R_1$ is an alkyl having at least four carbons and preferably from 6 to thirty carbons; aryl having at least 6 carbons and preferably from 6 to 10 carbons; acyl having at least 4 carbons and preferably from 6 to 18 carbons; cycloalkyl having at least four carbons and preferably from 6 to 10 carbons; or a polyether, preferably having 10 or fewer repeat units with propylene oxy and ethylene oxy being the preferred repeat units; and

wherein $R_2$, $R_3$ and $R_4$ can be the same or different and are alkyl having from 1 to 18 carbons, preferably from 4 to 8 carbons; aryl having from 6 to 10 carbons; cycloalkyl having at least 4 carbons and preferably from 4 to 6 carbons; siloxy; or alkoxy having at least 3 carbons and preferably from 6 to 18 carbons;

with p representing the number of Z substituents and being either 0, 1 or 2;

provided that when Y is Ge, Sn, Al, Ga, In or a transition metal, Z can only be $OR_1$ or $OSiR_2R_3R_4$ and p can only be 1 or 2; and

wherein the X substituents can be the same or different and are independently selected from halogen;

alkyl having at least 4 carbons and preferably from 4 to 18 carbons; aryl having from 6 to 10 carbons; acyl having at least 4 carbons and preferably from 4 to 18 carbons; $NR_5R_6$; $NO_2$; $OR_7$; $SO_3^-$; or $SO_2NR_5R_6$,

with $R_5$ and $R_6$ being the same or different and being H; alkyl having from one to 18 carbons and preferably from one to eight carbons; cycloalkyl having at least 4 carbons and preferably from 5 to 6 carbons; aryl having from 6 to 10 carbons; or with $R_5$ and $R_6$ being taken together to form a heterocyclic ring containing the N atom and containing from 4 to 7 members, and preferably form 5 to 6 members, and where the X substituent is attached to the aromatic ring through the N atom when the substituent is $NR_5R_6$,

$R_7$ is an alkyl having at least four carbons and preferably from 6 to thirty carbons; aryl having at least 6 carbons and preferably from 6 to 10 carbons; acyl having at least 4 carbons and preferably from 6 to 18 carbons; cycloalkyl having at least four carbons and preferably from 6 to 10 carbons; or a polyether, preferably having 10 or ferwer repeat units with propylene oxy and ethylene oxy being the preferred repeat units,

and with n and m indicating the number of independently selected X substituents, the n's being the same or different, each n being from 0 to 4, and the m's being the same or different, each m being from 0 to 2.

The use of the naphthalocyanine chromophore allows for the intense absorption of light as a specified wavelength, i.e., in the range of from about 760 to 850 nm. Such intense absorption provides for a very sensitive recording medium, thereby permitting detailed information to be recorded with a high signal to noise ratio upon playback. Accordingly, the commercial viability of the medium is enhanced. The surprising chemical and photolytic stability of the chromophores also enhances the desirability and commercial viability of the recording medium of the present invention in extending its useful life. Optical recording media employing the naphthalocyanine chromophores of the present invention are also adaptable to an erasable system. It is thus possible to produce an erasable recording medium which maintains its sensitivity through multiple record-read-erase cycles.

Description of the preferred embodiments

One class of naphthalocyanine chromophores of the general formula (I) are characterised in that Y is Si, Z is halogen, hydroxy, $OR_1$ or $OSiR_2R_3R_4$, $R_1$, $R_2$, $R_3$ and $R_4$ having the meanings stated in claim 1, and p is 0, 1 or 2.

Another class of naphthalocyanine chromophores of the general formula (I) are characterised in that Y is Si, Ge, Sn, Al, Ga, In or a transition metal, Z is $OR_1$ or $OSiR_2R_3R_4$, $R_1$, $R_2$, $R_3$ and $R_4$ having the meanings stated in claim 1, and p is 1 or 2.

The preferred naphthalocyanine chromophores for use in the present invention are those substituted with a sulfonamide, halogen or amine substituent, with a sulfonamidonaphthalocyanine chromophore being the most preferred. The number of X substituents preferably ranges anywhere from 0 to 8 substituents, e.g. 1 or 2 substituents.

It is preferred that the central hetero atom be silicon, germanium, tin, gallium or aluminium, with silicon, germanium and tin being the most preferred central hetero atoms.

In certain preferred chromophores of the formula (I) p is 2.

Seven specific chromophores found to be of particular utility in the practice of the present invention are

bis[tri-n-hexylsiloxy]silicon naphthalocyanine;
dichlorosilicon poly-N-di-n-octylsulfonamidonaphthalocyanine;
dihydroxysilicon poly-N-di-n-octylsulfonamidonaphthalocyanine;
bis[tri-n-hexylsiloxy]silicon poly-N-di-n-octylsulfonamidonaphthalocyanine,
bis[hydroxyheptapropyleneoxydimthylsiloxy]silicon tetrachloronaphthalocyanine,
bis[trihexylsiloxy]silicon tetra neopentoxynaphthalocyanine, and,
bis[trihexylsiloxy]silicon tetra-N-piperidyl naphthalocyanine.

The recording medium of the present invention in general comprises a substrate for the information layer, e.g. a relatively thick and thermally stable substrate in the form of a disk.

The information layer may comprise a film-forming polymer. As discussed hereinafter, the solubility characteristics of the chromophore are important having regard to compatibility with the polymer.

Naphthalocyanine compounds that exhibit surprising solubility characteristics have the general structural formula:

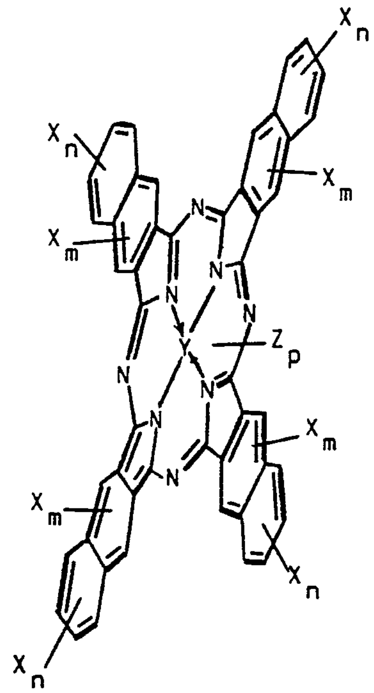

(Ia)

wherein

Y, Z, X, $R_1$—$R_7$, m, n and p are as defined above with respect to the general formula (I),

with the proviso that when Z is halogen or hydroxy, the X substituents, being the same or different, are alkyl having from 1 to 18 carbons, and preferably from 4 to 10 carbons, $SO_2NR_8R_9$, $NR_8R_9$ or $OR_{10}$,

wherein $R_8$ is H; alkyl having from one to 18 carbons and preferably from one to 8 carbons; or aryl having from 6 to 10 carbons, $R_9$ is alkyl having from one to 18 carbons and preferably from one to about 8 carbons; or aryl having from 6 to 10 carbons; or $R_8$ and $R_9$ can be taken together to form a heterocyclic ring containing the N atom and containing from 4 to 7 members, and preferably from 5 to 6 members, and where the X substituent is attached to the aromatic ring through the N atom when the substituent is $NR_8R_9$, and

$R_{10}$ is alkyl having from one to 18 carbons and preferably from one to about 8 carbons; or aryl having from 6 to 10 carbons.

It is preferred that there be at least one Z substituent in the naphthalocyanine chromophores of the formula (Ia). Both types of substituents, however, X and Z, may be present. It is the Z substituent which provides the major solubility characteristics to the dye, while the X substituents contribute primarily to the fine-tuning of the absorption maximum of the dye. It is preferred that the X substituents, the number and type, be selected so as to result in an absorption maximum for the dye which corresponds to the output wavelength of the laser to be used in the optical recording.

Thus, through the combination of the particular Z and X substituents of the chromophores of the formula (Ia), there is obtained a compound exhibiting unique spectral and solubility characteristics. The unique solubility characteristics are particularly important with regard to polymer compatibility. As the more compatible with the polymer, the higher loading achievable and a lesser chance of phase separation. Solubility in the same solvents as the polymer used in the recording layer also permits one to achieve higher loading of the dye in the recording layer, as well as to cast the dye/polymer using conventional techniques. In general, therefore, the chromophores of the formula (Ia) provide a compound having most desirbale spectroscopic and solubility properties for use in an optical recording medium information layer. As well, the said chromophores also exhibit the chemical and photolytic stability which makes naphthalocyanine chromophores in general so useful in an information layer for an optical recording medium.

In using the chromophores, it is preferred that the chromophores of the present invention be dissolved in a polymer film. Thus it is preferred to either cast a polymer layer or coat a substrate with a polymer/dye film. As noted above, conventional methods of casting may be utilized with the chromophores of the present invention.

Since the read and write steps all require operating within a very narrow depth of focus, the film, when applied, must provide a very flat surface in order to avoid errors and noise. In order to facilitate the coating procedure, it is also generally advantageous that the polymer and dye be soluble in a readily available organic solvent such as an alcohol or ketone. In this regard the polymer and dye should be compatible and mutually co-soluble. Also, upon evaporation of the solvent, the dye should not precipitate in a particulate form, which particulates would cause a scattering of light.

Any suitable coating technique may be used to achieve such a flat surface, with a conventional technique such as spin coating, which allows for a high degree of control of film thickness and flatness, being preferred. It is, of course, important that the polymer form a thin film coating.

In an illustrative recording system embodying the principles of the present invention, a record blank of disk form is subject to rotation at a constant linear or constant angular velocity while a beam of light from a light source, e.g., a laser, is focused on the information dye surface of the disk. The intensity of the light beam is controlled in accordance with the information to be recorded. Illustratively, the control is effected in accordance with carrier waves modulated in frequency by picture-representative video signals, with the light beam intensity varying as a result between a high level sufficient to efffect a detectable change in the physical characteristics of the absorptive dye material and a low level insufficient to effect such physical change, The frequency of the level alterations varying as the video signal amplitude changes. Preferred writing speeds are in the range of from $10^6$ to $10^7$ bits per second.

The relative diameter and depth of the holes or pits formed will, of course, depend not only on the optical and thermal properties of the dye information layer, but also on the characteristics of the writing beam, i.e., focussed spot diameter, depth of focus, intensity profile and intensity and duration of the writing pulse. Optimization of these parameters is familiar to those skilled in the art.

As a result of the pit-formation in the dye material, an information track comprising a succession of spaced pits is formed in the information surface of the disk, the pits appearing in those surface regions exposed to the high intensity beam. Variations in the length and separation of the pits are representative of the recorded information.

The result of the above-described recording process is the formation of an information record of a form which facilitates recovery of the recorded information by optical playback processes. The information track of such an information record comprises (1) undisturbed surface regions alternating with (2) pit regions formed by the pit forming process, preferably coated on a substrate. This information track can be, for example, in either analog or digital form.

In playback or read operations pursuant to the principles of the present invention, a light beam is focused upon the information track of a rotating information record of the above described type. The playback beam has a constant intensity at a level insufficient to effect recording on the dye layer or erasure of the recorded information by levelling. a photodetector, positioned to receive light reflected from the successive regions of the information track as they pass through the path of the focused light, develops a signal representative of the recorded information.

Several variations in the playback or reading system as known to the art are possible. The most preferred mode of reading information involves the relative reflection between the dye material surface and those areas in which pits have been formed in the recordation of information. When the reflectivity of the dye material surface is of relatively high reflectivity as compared to that of the substrate, the reflectivity in the areas of the pits will be less than in the regions without pits when a beam from the read laser passes thereby. Thus, a written bit can be registered as a decrease in reflected intensity. When the relative reflectivity of the dye material surface is low as compared to that of the substrate, however, the reflectivity in the areas of the pits will be more than in the regions without pits when a beam from the read laser is focused thereon. Accordingly, a written bit can be registered as an increase in reflected intensity.

An advantage of the present invention is that the resulting information medium can also be suitable for erasure. Complete and accurate erasure of recorded information can be readily carried out by heating the medium to a suffuciently high temperature such that the dye material becomes softened sufficiently to allow levelling of the surface. This can be done globally by heating the entire disk in an oven or some other suitable heating means, or by means of a defocused laser beam whose intensity at the surface of the recording layer is intermediate between that of the write beam and read beam. It is generally necessary to heat an area greater than that of a single bit (typically 1 µm in diameter).

The present invention is further illustrated by the following examples. The details of the following examples, however, are in no way meant to be limitative, but rather merely illustrative.

## Example 1

Preparation of Dihydroxysilicon tetrachloronaphthalocyanine

*4-Chloro-α,α,α',α'-tetrabromo-o-xylene*

Bromine (7.6 ml) was added over a period of 4.5 hours to 4-chloro-o-xylene (5.0 ml) at 120°C in direct sunlight. The resultant product was cooled and the suspension formed was filtered by suction. The solid was washed with an ethanol-water solution (1:1) and then dried under vacuum overnight. The product is a white solid. Yield 16 g, 92%.

*6-Chloro-2,3-naphthalenedicarbonitrile*

A mixture of 4-chloro-α,α,α',α'-tetrabromo-o-xylene (4.83 g), fumaronitrile (1.10 g), sodium iodide (4.77 g) and dimethylformamide (35 ml) was stirred at 80°C for 5.5 hours. The resulting mixture was cooled to near room temperature and then poured into water (500 ml). Enough $NaHSO_3$ (3.5 g) was added to the mixture to discharge the red color and render the mixture light tan. The solid was isolated from the suspension by suction filtration, washed with ether, and then dried under vacuum overnight. The product is a light tan solid. Yield 2.04 g, 97%.

*6-Chloro-1,3-diiminobenz(f)isoindoline*

Anhydrous ammonia was bubbled through a stirred mixture of 6-chloro-2,3-naphthalenedicarbonitrile (2.08 g), sodium methoxide (0.384 g), and methanol (100 ml) for 50 minutes. With continued ammonia addition, the mixture was refluxed for 3 hours. The solid was isolated from the suspension by suction filtration, washed with ether, and dried under vacuum overnight. The product is a light yellow solid. Yield 1.99 g, 83%.

*Dichlorosilicon tetrachloronaphthalocyanine*

6-Chloro-1,3-diiminobenz(f)isoindoline (1.88 g) was added over a period of 15 minutes to a refluxing mixture of $SiCl_4$ (2.0 ml) and quinoline (50 ml). The resultant mixture was allowed to reflux for 45 minutes and then allowed to cool to room temperature. The suspension formed was filtered to isolate a green solid. The solid was washed with methanol, chloroform, pyridine and then dried under vacuum for 1 hour. Yield 1.17 g, 60%.

*Dihydroxysilicon tetrachloronaphthalocyinine*

A mixture of dichlorosilicon tetrachloronaphthalocyanine (1.07 g) and concentrated sulfuric acid (40 ml) was stirred for 30 minutes. The brown mixture was poured onto ice (100 g) and the resulting suspension was filtered by suction. The brown solid was washed repeatedly with acetone and water (1:1). A mixture of the solid obtained and concentrated ammonia (30 ml) was refluxed for 1 hour. The green solid produced was isolated by suction filtration, washed with water, then acetone, and dried under vacuum overnight. Yield 0.89 g, 87%.

Example 2

Preparation of Sulfonamide Substituted Silicon Naphthalocyanines

A. *Dihydroxysilicon polysulfonylchloride naphthalocyanine — $Si(OH)_2[Nc(SO_2Cl)_n]$*

A mixture of dihydroxysilicon naphthalocyanine (0.4 g) and chlorosulfonic acid (1.3 ml) was stirred for 6 hours at 65°C. The resultant product was poured onto ice (100 g) which had been cooled with dry ice. The slurry was slowly warmed to melt the ice and then filtered. After wshing with ice water, the solid was dried under vacuum overnight. Yield 0.66 g.

B. *Dihydroxysilicon poly-N-di-n-octylsulfonamidonaphthalocyanine — $Si(OH)_2[Nc(SO_2N((CH_2)_7CH_3)_2)_n]$*

A mixture of the above product (0.50 g) and di-n-octylamine (5.0 ml) was stirred at 63°C for 2 hours. The product was isolated by suction filtration, washed with acetone, then water, and dried under vacuum overnight. The product is a deep green solid. Yield 0.62 g.

The degree of substitution, n, averages about 5 as indicated by material balance.

C. *Bis[trimethylsiloxy]silicon poly-N-di-n-octylsulfonamidonaphthalocyanine — $SiNcX_nZ_2$ where $X = SO_2N((CH_2)_7CH_3)_2$, $n = 5$, and $Z = OSi(CH_3)_3$*

A mixture of the sulfonamide substituted product above (0.624 g) water (20 ml), and pyridine (100 ml) was refluxed for 1.75 hours. The product was stripped of its volatile components under vacuum and dried under vacuum overnight. A mixture of this product (0.496 g) and pyridine (150 ml) was distilled until most of the pyridine (80 ml) had been removed. Bis(trimethylsilyl)acetamide (2.0 ml) was added and the solution was refluxed for 2 hours. The product was stripped of all its volatile components under vacuum and the solid was washed with hexanes. Yield 0.397 g.

Example 3

Preparation of: Bis[hydroxy heptapropyleneoxydimethylsiloxy] silicon tetrachloronaphthalocyanine — $Si[NcCl_4][OSi(CH_3)_2O(CHCH_3CH_2O)_7H]_2$

To a dry 500 ml three necked round bottom flask (equipped with magnetic stirring, a Dean-Stark moisture receiver, a reflux condenser, and a dry nitrogen purge) is added 300 ml dry pyridine (freshly distilled from calcium hydride), 2.00 g (2.19 mmol) dihydroxysilicon tetrachloronaphthalocyanine, and 20 ml tri-n-butylamine (dried over 4A molecular sieves). The mixture is heated to reflux and moisture is removed by azeotropic distillation until the water level (measured by Karl Fischer titration) is below 200 micrograms water per ml distillate. The reaction mixture is allowed to cool to room temperature and 8.0 ml (62 mmol) dichlorodimethylsilane is added via syringe. The mixture is allowed to stir at room temperature overnight (about 18 hr). The next day, the excess dichlorodimethylsilane (b.p. 70°C) is distilled from the reaction mixture. The distillation is continued until the boiling point of the distillate is greater than 115°C, indicating that all dichlorodimethylsilane is removed. To this reaction mixture is added 1.86 g (4.38 mmol) polypropylene glycol (425 average molecular weight). The stirring mixture is refluxed for 1.75 hours under a blanket of dry nitrogen. The solution is allowed to cool to room temperature, suction filtered (no solid residue), and then stripped of its volatile components under vacuum. The resulting green oil is taken up in diethyl ether, extracted repeatedly with dilute HCl, and then washed repeatedly with water. The ether solution is dried over calcium sulfate and then the ether is stripped off under vacuum. The resulting product would be a green solid that is highly soluble in a number of organic solvents including dichloromethane.

Example 4

Preparation of: Bis(trihexyl siloxy] silicon tetrachloronaphthalocyanine — $SiNcX_4Z_2$ where X = Cl and Z = $OSi(C_6H_{13})_3$

A mixture of dihydroxysilicon tetrachloronaphthalocyanine (0.66 g), tri-n-hexylsilanol (1.0 ml), tri-n-butylamine (10 ml), and 1,2,4-trimethylbenzene (150 ml) was refluxed for 2.5 hours and then filtered. The filtrate was mixed with 400 ml of a 1:1 ethanol-water solution and then filtered to isolate a green solid. The solid was washed with more ethanol-water solution, then with hexanes, and was finally air dried. Yield 0.138 g, 13%.

Example 5

The silicon naphthalocyanine dyes may be incorporated into polymer films by spin coating solutions containing dye and polymer in a suitable solvent. For example, a solution containing 0.1 g $Si(OH)_2Nc[SO_2N((CH_2)_7CH_3)_2]_n$ and 2 g Emerez-1553 (a dimer acid polyamide purchased from Emery Industries) ("Emerez" may be a registered trade mark) in 16 g n-butanol was carefully filtered through a 0.5 micrometer pore size membrane filter. Glass or plastic substrates were carefully cleaned to remove surface contaminations, given a final rinse with n-butanol, and then thoroughly dried in vacuum prior to coating. In the spin coating process the substrate was mounted on the spin coater and completely flooded with the green solution. The substrates were then spun at a rate (500 to 5000 rpm) that gave the desired film thickness. The green films were then baked in a vacuum oven at 65°C for two hours to remove any remaining n-butanol.

**Claims**

1. A recording medium having a layer for the optical recordation of information and for use with a recording laser providing light of a predetermined frequency, the said information layer comprising a naphthalocyanine chromophore, characterised in that the chromophore is of the general structural formula:

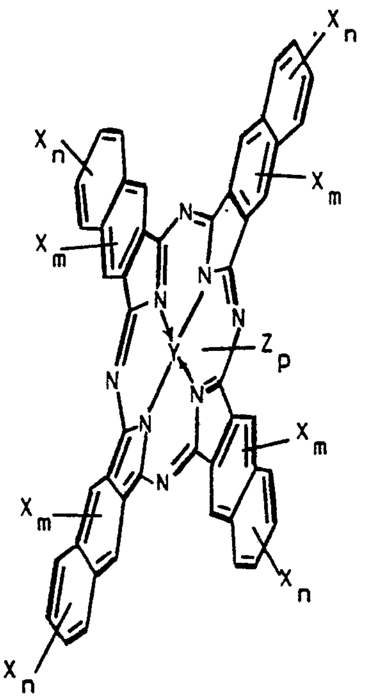

(I)

wherein Y is Si, Ge, Sn, Al, Ga, In or a transition metal;

Z is halogen; hydroxy; $OR_1$ or $OSiR_2R_3R_4$,

wherein $R_1$ is an alkyl having at least four carbons; aryl having at least 6 carbons; acyl having at least 4 carbons; cycloalkyl having at least four carbons; or a polyether, and

wherein $R_2$, $R_3$ and $R_4$ can be the same or different and are alkyl having from 1 to 18 carbons; aryl having from 6 to 10 carbons; cycloalkyl having at least 4 carbons; siloxy; or alkoxy having at least 3 carbons;

with p representing the number of Z substituents and being either 0, 1 or 2;

provided that when Y is Ge, Sn, Al, Ga, In or a transition metal, Z can only be $OR_1$ or $OSiR_2R_3R_4$ and p can only be 1 or 2; and

wherein the X substituents can be the same or different and are independently selected from halogen; alkyl having at least 4 carbons; aryl having from 6 to 10 carbons; acyl having at least 4 carbons; $NR_5R_6$; $NO_2$; $OR_7$; $SO_3$; or $SO_2NR_5R_6$,

with $R_5$ and $R_6$ being the same or different and being H; alkyl having from one to 18 carbons; cycloalkyl having at least 4 carbons; aryl having from 6 to 10 carbons; or with $R_5$ and $R_6$ being taken together to form a heterocyclic ring containing the N atom and containing from 4 to 7 members, and where the X substituent is attached to the aromatic ring through the N atom when the substituent is $NR_5R_6$,

$R_7$ is an alkyl having at least four carbons; aryl having at least 6 carbons; acyl having at least 4 carbons; cycloalkyl having at least four carbons; or a polyether,

and with n and m indicating the number of independently selected X substituents, the n's being the same or different and each n being from 0 to 4, and the m's being the same or different and each m being from 0 to 2.

2. A recording medium according to claim 1, characterised in that

$R_1$ is alkyl with 6 to 30 carbons, aryl with 6 to 10 carbons, acyl with 6 to 18 carbons, cycloalkyl with 6 to 10 carbons, or polyether having 10 or fewer repeat units, the repeat units being selected from propylene oxy and ethylene oxy, or

$R_2$, $R_3$ and $R_4$ are each selected independently from alkyl with 4 to 8 carbons, aryl with 6 to 10 carbons, cycloalkyl with 4 to 6 carbons, siloxy, and alkoxy with 6 to 18 carbons, and

each X is selected independently from halogen, alkyl with 4 to 18 carbons, aryl with 6 to 10 carbon, acyl with 4 to 18 carbons, $NR_5R_6$, $NO_2$, $-OR_7$, $SO_3$ or $SO_2NR_5R_6$, wherein

$R_5$ and $R_6$ are the same or different and are each H, alkyl with 1—8 carbons or aryl with 6 to 10 carbons, or $R_5$ and $R_6$ together with the intermediate N atom form a heterocyclic ring with 5 or 6 members, and

$R_7$ is alkyl with 6 to 30 carbons, aryl with 6 to 10 carbons, acyl with 6 to 18 carbons, cycloalkyl with 6 to 10 carbons, or polyether having 10 or fewer repeat units, the repeat units being selected from propylene oxy and ethylene oxy.

3. A recording medium according to claim 1 or 2, characterised in that Y is Si, Z is halogen, hydroxy, $OR_1$ or $OSIR_2R_3R_4$, with $R_1$, $R_2$, $R_3$ and $R_4$ having the meanings stated in claim 1, and p is 0, 1 or 2.

4. A recording medium according to claim 1 or 2, characterised in that Y is Si, Ge, Sn, Al, Ga, In or a transition metal, Z is $OR_1$ or $OSiR_2R_3R_4$, with $R_1$, $R_2$, $R_3$ and $R_4$ having the meanings stated in claim 1, and p is 1 or 2.

5. A recording medium according to claim 1, characterised in that each

Z is halogen or hydroxy and each X is selected independently from alkyl with 1 to 18 carbons, $SO_2NR_8R_9$, $NR_8R_9$ and $OR_{10}$, wherein

$R_8$ is H, alkyl with 1 to 18 carbons or aryl with 6 to 10 carbons,

$R_9$ is alkyl with 1 to 18 carbon atoms or aryl with 6 to 10 carbons, or

$R_8$ and $R_9$, together with the N atom to which they are shown attached, form a heterocyclic ring with 4 to 7 members, and

$R_{10}$ is alkyl with 1 to 18 carbons or aryl with 6 to 10 carbons.

6. A recording medium according to claim 1, 2 or 4, wherein Y is Si, Ge or Sn.

7. A recording medium according to any of claims 1 to 6, characterised in that the chromophore has from 0 to 8 X substituents.

8. A recording medium according to claim 7, characterised in that the chromophore has from 0 to 2 X substituents.

9. A recording medium according to any of claims 1 to 8, characterised in that the naphthalocyanine chromophore is substituted with a sulfonamide, halogen or amine substituent X.

10. A recording medium according to any of claims 1 to 9, characterised in that p is 2.

11. A recording medium according to claim 1, characterised in that the chromophore comprises bis-tri-n-hexylsiloxysilicon naphthalocyanine.

12. A recording medium according to claim 1, characterised in that the chromophore comprises dichlorosilicon poly-di-n-octylsulfonamidonaphthalocyanine.

13. A recording medium according to claim 1, characterised in that the chromophore comprises dihydroxysilicon poly-di-n-octylsulfonamidonaphthalocyanine.

14. A recording medium according to claim 1, characterised in that the chromophore comprises bis-tri-n-hexylsiloxysilicon poly-di-n-octylsulfonamidonaphthalocyanine.

15. A recording medium according to any of claims 1 to 14, characterised in that the information layer also comprises a film-forming polymer.

16. A recording medium according to any of claims 1 to 15, characterised in that it comprises a substrate for the said information layer.

17. A recording medium according to any of claims 1 to 16, characterised in that it is in the form of a readable information disk comprising a relatively thick and thermally stable substrate on which is coated the said information layer, said layer comprising an information track comprised of a succession of spaced pits.

**Patentansprüche**

1. Aufzeichnungsmedium mit einer Schicht zur optischen Aufzeichnung von Information und zur Verwendung mit einem Aufzeichnungs-Laser, der Licht einer vorher festgelegten Frequenz liefert, wobei diese Informations-Schicht einen Naphthalocyanin-Chromophor umfaßt, dadurch gekennzeichnet, daß der

Chromophor einer der allgemeinen Strukturformel

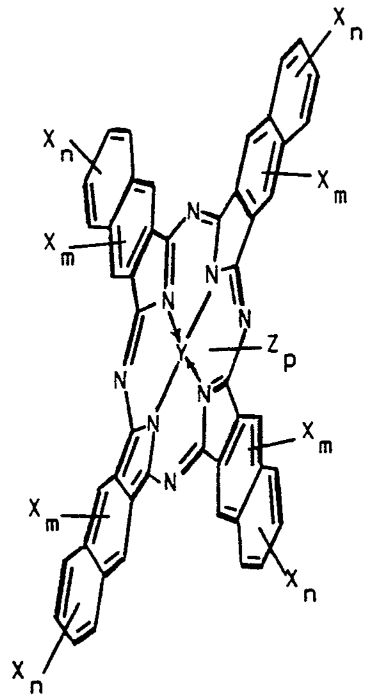

(I)

ist, in der

Y Si, Ge, Sn, Al, Ga, In oder ein Übergangsmetall ist,

Z Halogen, Hydroxy, $OR_1$ oder $OSiR_2R_3R_4$ ist, worin

$R_1$ ein Alkyl mit wenigstens vier Kohlenstoff-Atomen, Aryl mit wenigstens 6 Kohlenstoff-Atomen, Acyl mit wenigstens 4 Kohlenstoff-Atomen, Cycloalkyl mit wenigstens vier Kohlenstoff-Atomen oder ein Polyether ist und worin

$R_2$, $R_3$ und $R_4$ gleich oder verschieden sein können und Alkyl mit 1 bis 18 Kohlenstoff-Atomen, Aryl mit 6 bis 10 Kohlenstoff-Atomen, Cycloalkyl mit wenigstens 4 Kohlenstoff-Atomen, Siloxy oder Alkoxy mit wenigstens 3 Kohlenstoff-Atomen sind,

p die Zahl der Substituenten Z bezeichnet und 0, 1 oder 2 ist,

mit der Maßgabe, daß, wenn Y Ge, Sn, Al, Ga, In oder ein Übergangsmetall ist, Z nur $OR_1$ oder $OSiR_2R_3R_4$ sein kann und p nur 1 oder 2 sein kann, und worin die Substituenten

X gleich oder verschieden sein können und unabhängig voneinander aus Halogen, Alkyl mit wenigstens 4 Kohlenstoff-Atomen, Aryl mit 6 bis 10 Kohlenstoff-Atomen, Acyl mit wenigstens 4 Kohlenstoff-Atomen, $NR_5R_6$, $NO_2$, $OR_7$, $SO_3$ oder $SO_2NR_5R_6$ ausgewählt sind, wobei

$R_5$ und $R_6$ gleich oder verschieden sind und H, Alkyl mit 1 bis 18 Kohlenstoff-Atomen, Cycloalkyl mit wenigstens 4 Kohlenstoff-Atomen, Aryl mit 6 bis 10 Kohlenstoff-Atomen sind oder $R_5$ und $R_6$ zusammen genommen einen das Stickstoff-Atom enthaltenden, 4- bis 7-gliedrigen heterocyclischen Ring bilden, und wobei der Substituent X, wenn der Substituent $NR_5R_6$ ist, über das N-Atom an den aromatischen Ring gebunden ist,

$R_7$ ein Alkyl mit wenigstens vier Kohlenstoff-Atomen, Aryl mit wenigstens 6 Kohlenstoff-Atomen, Acyl mit wenigstens 4 Kohlenstoff-Atomen, Cycloalkyl mit wenigstens vier Kohlenstoff-Atomen oder ein Polyether ist und worin

n und m die Zahl der unabhängig voneinander gewählten Substituenten X bezeichnen, wobei die einzelnen Werte für n gleich oder verschieden sind und jedes n 0 bis 4 ist und die einzelnen Werte für m gleich oder verschieden sind und jedes m 0 bis 2 ist.

2. Aufzeichnungsmedium nach Anspruch 1, dadurch gekennzeichnet, daß

$R_1$ Alkyl mit 6 bis 30 Kohlenstoff-Atomen, Aryl mit 6 bis 10 Kohlenstoff-Atomen, Acyl mit 6 bis 18 Kohlenstoff-Atomen, Cycloalkyl mit 6 bis 10 Kohlenstoff-Atomen oder ein Polyether mit 10 oder weniger Repetiereinheiten ist, wobei die Repetiereinheiten aus Propylenoxy und Ethylenoxy ausgewählt sind, oder

$R_2$, $R_3$ und $R_4$ jeweils unabhängig voneinander aus Alkyl mit 4 bis 8 Kohlenstoff-Atomen, Aryl mit 6 bis 10 Kohlenstoff-Atomen, Cycloalkyl mit 4 bis 6 Kohlenstoff-Atomen, Siloxy und Alkoxy mit 6 bis 18 Kohlenstoff-Atomen ausgewählt sind, und

X jeweils unabhängig aus Halogen, Alkyl mit 4 bis 18 Kohlenstoff-Atomen, Aryl mit 6 bis 10 Kohlenstoff-Atomen, Acyl mit 4 bis 18 Kohlenstoff-Atomen, $NR_5R_6$, $NO_2$, $—OR_7$, $SO_3$ oder $SO_2NR_5R_6$ ausgewählt ist, worin

$R_5$ und $R_6$ gleich oder verschieden sind und jeweils H, Alkyl mit 1 bis 8 Kohlenstoff-Atomen oder Aryl mit 6 bis 10 Kohlenstoff-Atomen sind, oder $R_5$ und $R_6$ zusammen mit dem dazwischen stehenden Stickstoff-Atom einen 5- oder 6-gliedrigen heterocyclischen Ring bilden, und

$R_7$ Alkyl mit 6 bis 30 Kohlenstoff-Atomen, Aryl mit 6 bis 10 Kohlenstoff-Atomen, Acyl mit 6 bis 10 Kohlenstoff-Atomen, Cycloalkyl mit 6 bis 10 Kohlenstoff-Atomen oder ein Polyether mit 10 oder weniger Repetiereinheiten ist, wobei die Repetiereinheiten aus Propylenoxy und Ethylenoxy ausgewählt sind.

3. Aufzeichnungsmedium nach Anspruch 1 oder 2, dadurch gekennzeichnet, daß Y Si ist, Z Halogen, Hydroxy, $OR_1$ oder $OSiR_2R_3R_4$ ist, wobei $R_1$, $R_2$, $R_3$ und $R_4$ die in Anspruch 1 angegebenen Bedeutungen haben, und p 0, 1 oder 2 ist.

4. Aufzeichnungsmedium nach Anspruch 1 oder 2, dadurch gekennzeichnet, daß Y Si, Ge, Sn, Al, Ga, In oder ein Übergangsmetall ist, Z $OR_1$ oder $OSiR_2R_3R_4$ ist, wobei $R_1$, $R_2$, $R_3$ und $R_4$ die in Anspruch 1 angegebenen Bedeutungen haben, und p 1 oder 2 ist.

5. Aufzeichnungsmedium nach Anspruch 1, dadurch gekennzeichnet, daß jedes

Z Halogen oder Hydroxy ist und jedes

X unabhängig aus Alkyl mit 1 bis 18 Kohlenstoff-Atomen, $SO_2NR_8R_9$, $NR_8R_9$ und $OR_{10}$ ausgewählt ist, worin

$R_8$ H, Alkyl mit 1 bis 18 Kohlenstoff-Atomen oder Aryl mit 6 bis 10 Kohlenstoff-Atomen ist,

$R_9$ Alkyl mit 1 bis 18 Kohlenstoff-Atomen oder Aryl mit 6 bis 10 Kohlenstoff-Atomen ist, oder

$R_8$ und $R_9$ zusammen mit dem Stickstoff-Atom, an das gebunden sie dargestellt sind, einen 4- bis 7-gliedrigen heterocyclischen Ring bilden und

$R_{10}$ Alkyl mit 1 bis 18 Kohlenstoff-Atomen oder Aryl mit 6 bis 10 Kohlenstoff-Atomen ist.

6. Aufzeichnungsmedium nach Anspruch 1, 2 oder 4, worin Y Si, Ge oder Sn ist.

7. Aufzeichnungsmedium nach irgendeinem der Ansprüche 1 bis 6, dadurch gekennzeichnet, daß der Chromophor 0 bis 8 Substituenten X aufweist.

8. Aufzeichnungsmedium nach Anspruch 7, dadurch gekennzeichnet, daß der Chromophor 1 oder 2 Substituenten X aufweist.

9. Aufzeichnungsmedium nach irgendeinem der Ansprüche 1 bis 8, dadurch gekennzeichnet, daß der Naphthalocyanin-Chromophor mit einem Sulfonamid-, Halogen- oder Amin-Substituenten X substituiert ist.

10. Aufzeichnungsmedium nach irgendeinem der Ansprüche 1 bis 9, dadurch gekennzeichnet, daß p 2 ist.

11. Aufzeichnungsmedium nach Anspruch 1, dadurch gekennzeichnet, daß der Chromophor Bis-tri-n-hexylsiloxysiliciumnaphthalocyanin umfaßt.

12. Aufzeichnungsmedium nach Anspruch 1, dadurch gekennzeichnet, daß der Chromophor Dichlorosilicium-poly-di-n-octylsulfonamidonaphthalocyanin umfaßt.

13. Aufzeichnungsmedium nach Anspruch 1, dadurch gekennzeichnet, daß der Chromophor Dihydroxysilicium-poly-di-n-octylsulfonamidonaphthalocyanin umfaßt.

14. Aufzeichnungsmedium nach Anspruch 1, dadurch gekennzeichnet, daß der Chromophor Bis-tri-n-hexylsiloxysilicium-poly-di-n-octylsulfonamidonaphthalocyanin umfaßt.

15. Aufzeichnungsmedium nach irgendeinem der Ansprüche 1 bis 14, dadurch gekennzeichnet, daß die Informations-Schicht außerdem ein filmbildendes Polymer umfaßt.

16. Aufzeichnungsmedium nach irgendeinem der Ansprüche 1 bis 15, dadurch gekennzeichnet, daß es ein Substrat für die Informations-Schicht umfaßt.

17. Aufzeichnungsmedium nach irgendeinem der Ansprüche 1 bis 16, dadurch gekennzeichnet, daß es in Form einer lesbaren Informationsscheibe vorliegt, die ein relativ dickes, thermisch beständiges Substrat umfaßt, das mit der Informations-Schicht beschichtet ist, wobei die Schicht eine Informationsspur aus einer Folge von in Abständen angeordneten Löchern umfaßt.

**Revendications**

1. Support d'enregistrement ayant une couche pour l'enregistrement optique d'information et pour une utilisation avec un laser d'enregistrement fournissant une lumière d'une fréquence prédéterminée, ladite couche d'information comprenant un chromophore de naphthalocyanine, caractérisé en ce que le chromophore est de formule structurale générale:

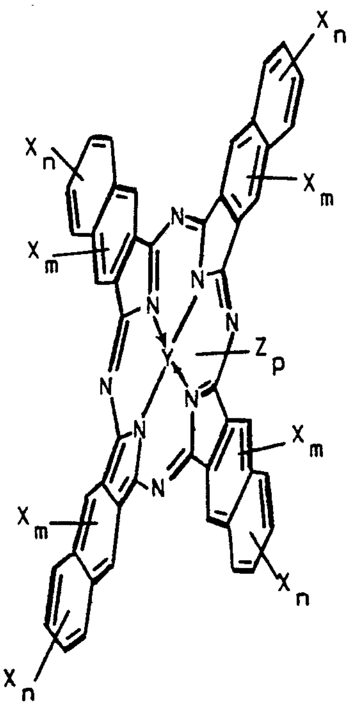

(I)

dans laquelle Y est Si, Ge, Sn, Al, Ga, In ou un métal de transition;

Z est halogène; hydroxy; $OR_1$ ou $OSiR_2R_3R_4$,

$R_1$ étant un alkyle ayant au moins quatre carbones; un aryle ayant au moins 6 carbones; un acyle ayant au moins 4 carbones; un cycloalkyle ayant au moins 4 carbones ou un polyéther, et

$R_2$, $R_3$ et $R_4$ pouvant être identiques ou différents et sont alkyle ayant de 1 à 18 carbones; aryle ayant de 6 à 10 carbone; cycloalkyle ayant au moins 4 carbones; siloxy; ou alcoxy ayant au moins 3 carbones;

p représentant le nombre de substituants Z et étant soit 0, 1 ou 2;

avec la condition que lorsque Y est Ge, Sn, Al, Ga, In ou un métal de transition, Z peut être seulement $OR_1$ ou $OSiR_2R_3R_4$ et p peut être seulement 1 ou 2; et dans laquelle les substituants X peuvent être identiques ou différents et sont indépendamment choisis parmi halogène; alkyle ayant au moins 4 carbones; aryle ayant de 6 à 10 carbones; acyle ayant au moins 4 carbones; $NR_5R_6$; $NO_2$; $OR_7$; $SO_3$; ou $SO_2NR_5R_6$,

$R_5$ et $R_6$ étant identiques ou différents et étant H; alkyle ayant de un à 18 carbones; cycloalkyle ayant au moins 4 carbones; aryle ayant de 6 à 10 carbones; ou $R_5$ et $R_6$ étant pris ensemble pour former un noyau hétérocyclique contenant l'atome de N et contenant de 4 à 7 chaînons, et où le substituant X est fixé au noyau aromatique par l'intermédiaire de l'atome de N lorsque le substituant est $NR_5R_6$,

$R_7$ est un alkyle ayant au moins quatre carbones; un aryle ayant au moins 6 carbones; un acyle ayant au moins 4 carbones; un cycloalkyle ayant au moins quatre carbones; ou un polyéther,

et n et m indiquant le nombre de substituants X choisis de façon indépendante, les n étant identiques ou différents et chaque n étant de 0 à 4, et les m étant identiques ou différents et chaque m étant de 0 à 2.

2. Support d'enregistrement selon la revendication 1, caractérisé en ce que

$R_1$ est un alkyle avec 6 à 30 carbones, un aryle avec 6 à 10 carbones, un acyle avec 6 à 18 carbones, un cycloalkyle avec 6 à 10 carbones, ou un polyéther ayant 10 ou moins d'unités répétitives, les unités répétitives étant choisies parmi propylène oxy et éthylène oxy, ou

$R_2$, $R_3$ et $R_4$ sont chacun choisis indépendamment parmi alkyle avec 4 à 8 carbones, aryle avec 6 à 10 carbones, cycloalkyle avec 4 à 6 carbones, siloxy et alcoxy avec 6 à 18 carbones, et

chaque X est choisi indépendamment parmi halogène, alkyle avec 4 à 18 carbones, aryle avec 6 à 10 carbones, acyle avec 4 à 18 carbones, $NR_5R_6$, $NO_2$, $—OR_7$, $SO_3$ ou $SO_2NR_5R_6$,

$R_5$ et $R_6$ étant identiques ou différents et étant chacun H, alkyle avec 1—8 carbones ou aryle avec 6 à 10 carbones, ou $R_5$ et $R_6$ forment ensemble avec l'atome de N intermédiaire un noyau hétérocyclique avec 5 ou 6 chaînons, et

$R_7$ est alkyle avec 6 à 30 carbones, aryle avec 6 à 10 carbones, acyle avec 6 à 18 carbones, cycloalkyle avec 6 à 10 carbones, ou polyéther ayant 10 unités répétitives ou moins, les unités répétitives étant choisies parmi propylène oxy et éthylène oxy.

3. Support d'enregistrement selon la revendication 1 ou 2, caractérisé en ce que Y est Si, Z est halogène, hdyroxy, $OR_1$ ou $OSiR_2R_3R_4$, avec $R_1$, $R_2$, $R_3$ et $R_4$ ayant les significations données à la revendication 1, et p est 0, 1 ou 2.

4. Support d'enregistrement selon la revendication 1, ou 2, caractérisé en ce que Y est Si, Ge, Sn, Al, Ga, In ou un métal de transition, Z est $OR_1$ ou $OSiR_2R_3R_4$, avec $R_1$, $R_2$, $R_3$ et $R_4$ ayant les significations indiquées à la revendication 1, et p est 1 ou 2.

5. Support d'enregistrement selon la revendication 1, caractérisé en ce que chaque

Z est halogène ou hydroxy et chaque X est choisi indépendamment parmi alkyle avec 1 à 18 carbones, $SO_2NR_8R_9$, $NR_8R_9$ et $OR_{10}$, où

$R_8$ est H, alkyle avec 1 à 18 carbones ou aryle avec 6 à 10 carbones,

$R_9$ est alkyle avec 1 à 18 atomes de carbone ou aryle avec 6 à 10 carbones, ou

$R_8$ et $R_9$, ensemble avec l'atome de N auquel ils sont montrés fixés, forment un noyau hétérocyclique avec 4 à 7 chaînons, et

$R_{10}$ est alkyle avec 1 à 18 carbones ou aryle avec 6 à 10 carbones.

6. Support d'enregistrement selon la revendication 1, 2 ou 4, dans lequel Y est Si, Ge ou Sn.

7. Support d'enregistrement selon l'une des revendications 1 à 6, caractérisé en ce que le chromophore a de 0 à 8 substituants X.

8. Support d'enregistrement selon la revendication 7, caractérisé en ce que le chromophore a 1 ou 2 substituants X.

9. Support d'enregistrement selon l'une des revendications 1 à 8, caractérisé en ce que le chromophore de naphtalocyanine est substitué par un substituant X qui est sulfonamide, halogène ou amine.

10. Support d'enregistrement selon l'une des revendications 1 à 9, caractérisé en ce que p est 2.

11. Support d'enregistrement selon la revendication 1, caractérisé en ce que le chromophore comprend la bis-tri-n-hexylsiloxysilico naphtalocyanine.

12. Support d'enregistrement selon la revendication 1, caractérisé en ce que le chromophore comprend la dichlorosilico poly-di-n-octylsulfonamidonaphtalocyanine.

13. Support d'enregistrement selon la revendication 1, caractérisé en ce que le chromophore comprend la dihydroxysilico poly-di-n-octylsulfonamidonaphthalocyanine.

14. Support d'enregistrement selon la revendication 1, caractérisé en ce que le chromophore comprend la bis-tri-n-hexylsiloxysilico poly-di-n-octylsulfonamidonaphtalocyanine.

15. Support d'enregistrement selon l'une des revendications 1 à 14, caractérisé en ce que la couche d'information comprend aussi un polymère filmogène.

16. Support d'enregistrement selon l'une des revendications 1 à 15, caractérisé en ce qu'il comprend un substrat pour ladite couche d'information.

17. Support d'enregistrement selon l'une des revendications 1 à 16, caractérisé en ce qu'il est sous la forme d'un disque d'information lisible comprenant un substrat relativement épais et thermiquement stable sur lequel est étalée ladite couche d'information, ladite couche comprenant une piste d'information constituée par une succession de puits espacés.